# EUROPÄISCHE PATENTSCHRIFT

(11) **EP 3 396 080 B1**
(45) Veröffentlichungstag und Bekanntmachung des Hinweises auf die Patenterteilung: **20.11.2019**
(21) Anmeldenummer: 18167258.5
(22) Anmeldetag: 13.04.2018
(51) Int. Cl.: E04C 2/24, E04C 2/32, E04C 2/36, B32B 3/12

(54) **VERFAHREN ZUR HERSTELLUNG EINES LEICHTBAUELEMENTS**
METHOD FOR PRODUCING A LIGHTWEIGHT ELEMENT
PROCÉDÉ DE FABRICATION D'UN ÉLÉMENT DE CONSTRUCTION LÉGÈRE

(30) Priorität: 24.04.2017 DE 102017108627
(43) Veröffentlichungstag der Anmeldung: 31.10.2018
(73) Patentinhaber: Ross Design GmbH, 77694 Kehl (DE)
(72) Erfinder: Ross, Martin, 77694 Kehl (DE)
(74) Vertreter: Kohler Schmid Möbus Patentanwälte

(56) Entgegenhaltungen:
- EP-A1- 0 584 041
- CA-A- 884 059
- DE-A1-102014 118 514
- FR-A1- 2 690 870
- US-A- 3 732 138
- US-A- 3 886 023

## Beschreibung

Die Erfindung betrifft ein Verfahren zur Herstellung eines Leichtbauelements und ein Leichtbauelement.

Leichtbauelemente sind grundsätzlich bekannt. Sie werden beispielsweise in Wohnwägen eingesetzt, wo auf ein geringes Gewicht geachtet werden muss. Häufig besteht eine Zwischenschicht eines Leichtbauelements aus einer Wabenplatte oder aus einer Schaumstoffplatte. Wird ein solches Leichtbauelement aus einer größeren Leichtbauplatte ausgeschnitten, so ist bisher vorgesehen, die Schnittkante zu verkleiden. Insbesondere, wenn es sich bei der Zwischenschicht um eine Wabenplatte handelt, ist es schwierig, die Verkleidung, häufig auch Umleimer genannt, an der Kante dauerhaft aufzubringen.

Aus der DE 10 2014 118 514 A1 ist ein Verfahren zur Herstellung eines Leichtbauelements bekannt, bei dem zunächst eine Leichtbauplatte mit einer oberen und einer unteren Deckschicht sowie einer dazwischen angeordneten Zwischenschicht hergestellt wird, wobei das Leichtbauelement entlang einer vorgegebenen Bahn von der Leichtbauplatte ab- oder herausgetrennt wird und die Leichtbauplatte vor dem Austrennen des Leichtbauelements im Bereich der vorgegebenen Bahn mit einem Verstärkungsmaterial verstärkt wird. Das Verstärkungsmaterial wird dabei eingebracht, ehe die zweite Deckschicht aufgebracht wird.

Ein Verfahren zur Herstellung eines Leichtbauelements ist ferner aus der EP 0 584 041 A1 bekannt.

Aufgabe der vorliegenden Erfindung ist es, ein Verfahren zum Herstellen eines Leichtbauelements herzustellen, bei dem auf einen Umleimer verzichtet werden kann. Außerdem soll es das Verfahren erlauben, nicht nur plattenförmige Leichtbauelemente herzustellen, sondern auch geformte Leichtbauelemente.

Gelöst wird diese Aufgabe erfindungsgemäß durch ein Verfahren zur Herstellung eines Leichtbauelements mit den Merkmalen des Patentanspruchs 1.

Die Verfahrensschritte werden vorzugsweise in der oben angegebenen Reihenfolge durchgeführt. Denkbar wäre es, eine Zwischenschicht, die bereits Ausnehmungen aufweist, mit der ersten Deckschicht zu verbinden, also die Schritte a.i. und a.ii. zu vertauschen. Dabei können Ausnehmungen in die Zwischenschicht bei deren Herstellung eingebracht bzw. ausgebildet werden.

Erfindungsgemäß ist demnach vorgesehen, die Vergussmasse in die Leichtbauplatte einzubringen, wenn schon eine fertige Sandwichstruktur bestehend aus der ersten und zweiten Deckschicht und der Zwischenschicht besteht. Das Leichtbauelement kann in den Bereichen aus der Leichtbauplatte herausgetrennt bzw. abgetrennt werden, in denen sich die Vergussmasse befindet. Somit ist die Vergussmasse entlang des Umfangs des herausgetrennten Leichtbauelements vorhanden und stellt eine Sichtkante dar, die nicht mit einem Umleimer versehen werden muss. Insbesondere können auf diese Art und Weise optisch besonders ansprechende Leichtbauelemente hergestellt werden. Als Vergussmasse kann beispielsweise Polyurethan, insbesondere 2K-Polyurethan, welches in einer Düse gemischt wird, eingesetzt werden. Insbesondere kann nicht quellendes Polyurethan bzw. wenig schrumpfendes Polyurethan eingesetzt werden. Das eingesetzte Polyurethan kann eingefärbt werden. Es kann lichtecht sein. Der Begriff "Leichtbauplatte" bedeutet nicht zwangsläufig, dass die Leichtbauplatte vollständig eben, flach ausgebildet ist. Beispielsweise können Bereiche zueinander abgewinkelt sein.

Die Deckschichten können beispielsweise aus HPL (High Pressure Laminate), CPL (Continuous Pressure Laminate) oder Sperrholz ausgebildet sein. Die Zwischenschicht kann beispielsweise als Wabenplatte oder Styroporplatte, insbesondere Polyurethanplatte, Polypropylenplatte, als Faserplatte oder XPS-(Extrudierte Polystyrol-Hartschaum)Platte ausgebildet sein. Die Verbindung der ersten Deckschicht mit der Zwischenschicht kann beispielsweise dadurch erfolgen, dass ein Klebstoff auf die Deckschicht und/oder die Zwischenschicht aufgetragen wird und anschließend die erste Deckschicht mit der Zwischenschicht verpresst wird. Diese Vorgehensweise ist ungewöhnlich, da zu befürchten ist, dass sich beim Verpressen von lediglich einer Deckschicht und Zwischenschicht ein Verzug ergibt.

Die Zwischenschicht kann eine Dicke im Bereich von 3 mm bis 100 mm aufweisen. Die Deckschichten können eine Dicke im Bereich von 0,5 mm oder größer aufweisen.

Die ausgenommenen und mit Vergussmasse verfüllten Bereiche werden so gewählt und angeordnet und das Leichtbauelement wird so aus der Leichtbauplatte herausgetrennt, dass die Sichtkante des Leichtbauelements Vergussmasse aufweist. Insbesondere kann die Sichtkante des Leichtbauelements vollständig umfangsmäßig Vergussmasse aufweisen. Das Material der Vergussmasse stellt somit die Sichtkante dar. Zusätzlich verleiht die Vergussmasse dem Leichtbauelement eine sehr hohe Stabilität.

Die Vergussmasse kann mit einem Druck < 4 bar, insbesondere mit einem Druck im Bereich von 0,3 bar bis 3,2 bar, eingebracht werden. Die Vergussmasse kann somit mit einem relativ geringen Druck eingebracht werden, wodurch verhindert wird, dass die Leichtbauplatte gesprengt wird. Außerdem ist es nicht notwendig, ein Haltewerkzeug einzusetzen, um die Leichtbauplatte während des Auffüllens mit Vergussmasse zusammenzuhalten.

Die Vergussmasse kann an einer Stirnseite der Leichtbauplatte eingebracht werden. Vorzugsweise ist in diesem Bereich die Zwischenschicht ausgenommen und sind Kanäle in der Zwischenschicht vorgesehen, die es erlauben, dass die Vergussmasse in der Leichtbauplatte an die gewünschten Stellen gelangt.

Alternativ oder zusätzlich ist es denkbar, dass in einer der Deckschichten eine Einfüllöffnung erzeugt wird und die Vergussmasse durch die Einfüllöffnung eingebracht wird. Während des Einbringens der Vergussmasse in die Leichtbauplatte kann an einer von der Einbringstelle der Leichtbauplatte beabstandeten Stelle ein Unterdruck angelegt werden. Dadurch kann sichergestellt werden, dass die Vergussmasse alle gewünschten Stellen in der Leichtbauplatte erreicht. Außerdem kann auf diese Weise verhindert werden, dass Luftblasen in der Vergussmasse eingeschlossen werden.

In die Zwischenschicht kann eine Luftaufnahme eingebracht werden. Insbesondere können bewusst in der Zwischenschicht Kammern vorgesehen werden, in die hinein Luft entweichen kann. Dies ist insbesondere dann sinnvoll, wenn eine Ausnehmung in der Zwischenschicht von zwei unterschiedlichen Seiten aus mit Vergussmasse befüllt wird.

In die Zwischenschicht kann eine Kabelaufnahme eingebracht werden. Eine solche Kabelaufnahme wird vorzugsweise so eingebracht, dass sie nicht mit Vergussmasse gefüllt werden kann, sodass ein Kabel in diesem Bereich geführt werden kann.

In die Kabelaufnahme kann eine Kabelführung eingelegt werden. Eine Kabelführung kann beispielsweise schlauchartig, insbesondere als Rechteckschlauch ausgebildet sein. Weiterhin können in einer Deckschicht Kabeldurchführungen erzeugt werden, die in die Kabelaufnahme münden. Somit ist ein Kabel, welches zwischen den Deckschichten angeordnet ist, von außen zugänglich.

Es kann eine Befestigungsmittelaufnahme in der Zwischenschicht erzeugt werden und ein Befestigungsmittel eingelegt werden. Beispielsweise kann ein Holzklotz eingelegt werden, an dem weitere Elemente befestigt werden können.

Weiterhin kann ein Gewinde in die ausgehärtete Vergussmasse geschnitten werden. Somit kann auf einfache Art und Weise eine Schraube an der Leichtbauplatte befestigt werden.

Die Sichtkante des Leichtbauelements, also insbesondere die ausgehärtete Vergussmasse, kann bearbeitet werden. Beispielsweise kann die Sichtkante poliert oder gefräst werden. Beispielsweise kann die Sichtkante abgerundet werden, ihr eine ballige Form gegeben werden. Auch eine Ausnehmung nach Art einer Rille kann an der Sichtkante angebracht werden. Grundsätzlich ist eine Formgebung der Sichtkante denkbar.

Die Leichtbauplatte kann vor dem Auffüllen mit Vergussmasse, insbesondere beim Verbinden der Zwischenschicht mit der zweiten Deckschicht, insbesondere mittels einer Schablone, verformt werden. Somit kann eine Leichtbauplatte und in der Folge ein Leichtbauelement geschaffen werden, welches nicht mehr plattenförmig, also eben ausgebildet ist, sondern eine insbesondere gebogene, dreidimensionale Gestalt aufweist.

Somit können unterschiedliche Elemente hergestellt werden, beispielsweise Griffe oder Tischplatten mit gebogenen Endbereichen.

Um die Herstellung zu erleichtern kann vorgesehen sein, dass die Leichtbauplatte vor dem Auffüllen mit Vergussmasse in zumindest zwei Teile aufgeteilt wird.

In einem Bereich kann die Deckschicht bis zu einem darunterliegenden Vergussmassenbereich entfernt werden. Somit können Muster, Intarsien oder Beschriftungen erzeugt werden. Vorzugsweise weist dabei die Vergussmasse eine andere Farbe auf als die Deckschicht, sodass die Farbe der Vergussmasse einen Kontrast darstellt zu der Farbe der Deckschicht in den Bereichen außerhalb des Bereichs, in dem die Deckschicht entfernt wurde.

In den Rahmen der Erfindung fällt außerdem ein Leichtbauelement mit den Merkmalen gemäß Patentanspruch 13.

Das Leichtbauelement kann uneben ausgebildet sein. Bisher war es nicht möglich, gebogene Leichtbauelemente herzustellen. Durch die Kombination einer bekannten Leichtbauplatte mit der Vergussmasse, die in bestimmten Bereichen, insbesondere im Randbereich des Leichtbauelements vorgesehen ist, ist dies jedoch möglich. Insbesondere ist das gebogene Leichtbauelement durch diese Maßnahme besonders formstabil.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung in verschiedenen Stadien der Herstellung dargestellt und in der nachfolgenden Beschreibung näher erläutert.

Es zeigen:
- Fig. 1: eine Ansicht einer Leichtbauplatte während der Herstellung;
- Fig. 2a: eine Leichtbauplatte, bei der eine Zwischenschicht bereichsweise ausgenommen wurde;
- Fig. 2b: eine Leichtbauplatte, bei der ebenfalls Bereiche der Zwischenschicht ausgenommen wurden;
- Fig. 3: eine halbierte Leichtbauplatte;
- Fig. 4: eine Darstellung zur Verdeutlichung der Formgebung einer Leichtbauplatte;
- Fig. 5: eine weitere Darstellung zur Erläuterung der Formgebung einer Leichtbauplatte;
- Fig. 6: eine gebogene Leichtbauplatte;
- Fig. 7: eine Darstellung zur Erläuterung des Auffüllens von Ausnehmungen mit Vergussmasse;
- Fig. 8a: ein Leichtbauelement, bei dem die Strukturen innerhalb der Zwischenschicht angedeutet sind;
- Fig. 8b: eine Draufsicht auf ein Leichtbauelement.

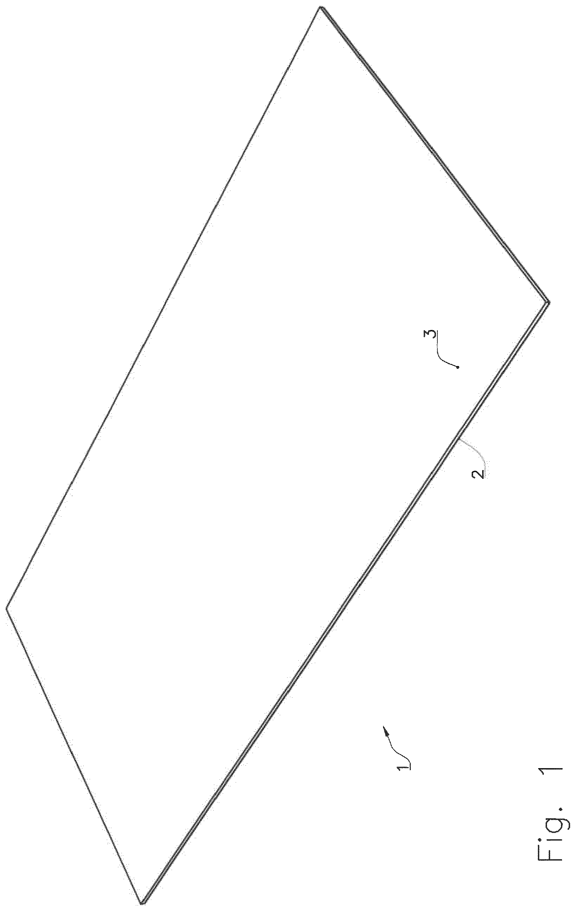

Die Fig. 1 zeigt eine Leichtbauplatte 1 während deren Herstellung. Insbesondere ist die in der Fig. 1 dargestellte Leichtbauplatte 1 noch nicht vollständig hergestellt. Sie weist lediglich eine erste Deckschicht 2 und eine damit verbundene Zwischenschicht 3 auf. Die Zwischenschicht 3 ist demnach nur einseitig mit einer Deckschicht 2 beschichtet. Die Zwischenschicht 3 kann aus Styropor ausgebildet sein.

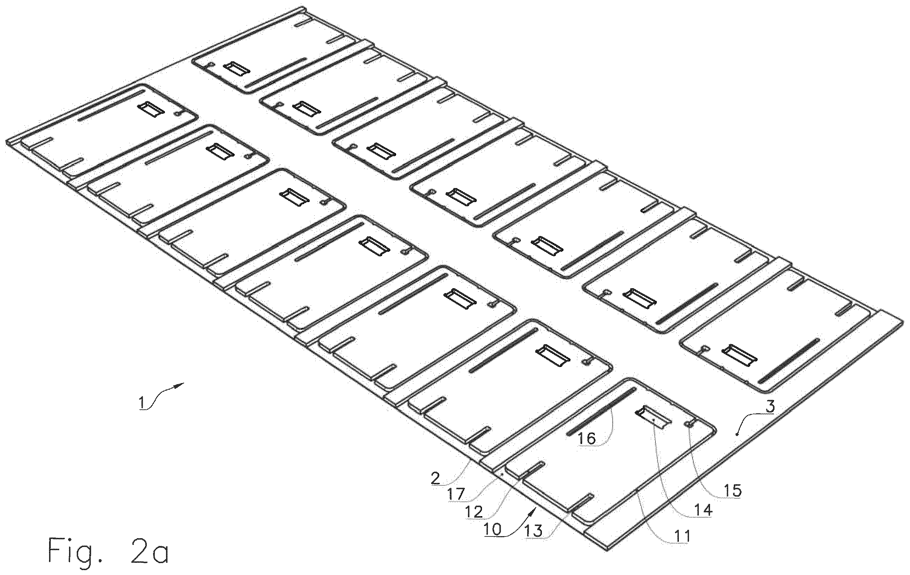

Die Fig. 2a zeigt die Leichtbauplatte 1 nach einem weiteren Herstellungsschritt. In der Leichtbauplatte 1 wurde die Zwischenschicht 3 in unterschiedlichen Bereichen ausgenommen. Aus der Leichtbauplatte 1 sollen später 14 Leichtbauelemente 10 hergestellt werden. Für jedes Leichtbauelement 10 können Umfangsbereiche durch Erzeugen einer entsprechenden nutartigen Ausnehmung 11 in der Zwischenschicht 3 erzeugt werden. Weiterhin können Ausnehmungen 12, 13 vorgesehen sein, die später mit Vergussmasse befüllt und die als Befestigungsbereiche dienen sollen. Eine Ausnehmung 14 kann vorgesehen sein, um dort ein Befestigungsmittel anbringen zu können, beispielsweise einen Holzklotz. Zu erkennen ist, dass die Ausnehmung 14 über keinen Kanal in Verbindung mit anderen Ausnehmungen steht. Sämtliche zur Befüllung mit Vergussmasse vorgesehenen Ausnehmungen 11, 12, 13, 15 können miteinander verbunden sein.

Auch die Ausnehmung 15 ist zur Befüllung mit Vergussmasse vorgesehen. Auch dort kann eine Befestigung erfolgen. Die Ausnehmung 16 dient als Kabelaufnahme. Auch sie kann nicht mit Vergussmasse befüllt werden, da sie nicht kommunizierend mit einer anderen Ausnehmung in Verbindung steht. Bei dem in der Fig. 2a gezeigten Ausführungsbeispiel ist vorgesehen, dass eine Befüllung mit Vergussmasse stirnseitig erfolgt. Daher ist der Bereich 17 im Bereich der Stirnseite der Leichtbauplatte 1 ausgenommen.

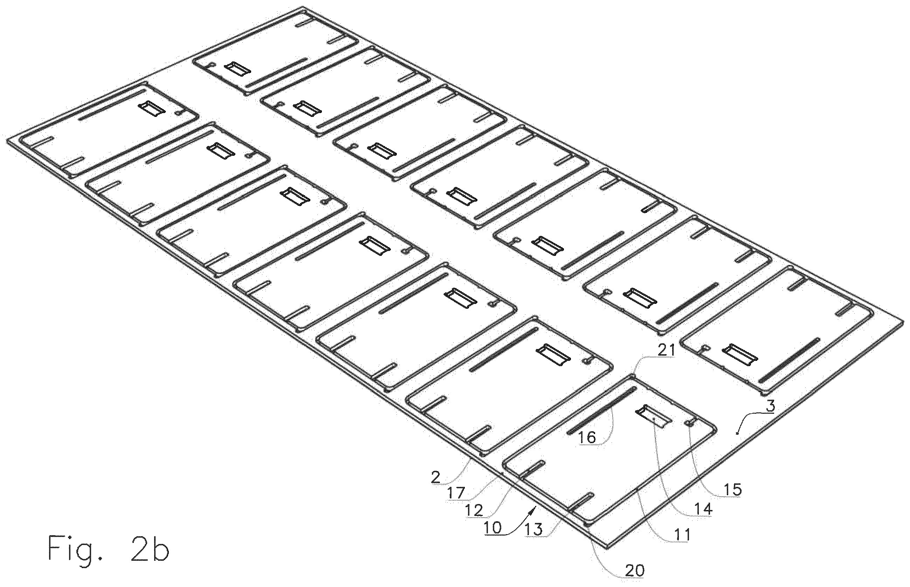

Die Fig. 2b zeigt eine alternative Ausführungsform. Der Fig. 2a entsprechende Elemente sind mit gleichen Bezugsziffern bezeichnet. Im Unterschied zur Fig. 2a ist bei der Ausführungsform gemäß Fig. 2b der Bereich 17 an der Stirnseite nicht ausgenommen. Dafür sind in der Zwischenschicht 3 Ausnehmungen 20, 21 vorgesehen, die mit übrigen Ausnehmungen 11, 12, 13, 15 der Zwischenschicht 3, die mit Vergussmasse befüllt werden sollen, in Verbindung stehen. Über die Ausnehmungen 20, 21 kann somit Vergussmasse eingebracht oder Luft durch einen Unterdruck abgezogen werden. Beispielsweise kann im Bereich der Ausnehmung 20 Vergussmasse zugeführt und an der Ausnehmung 21 ein Unterdruck erzeugt werden, sodass sich die Vergussmasse in den Ausnehmungen 11, 12, 13, 15 der Zwischenschicht 3 verteilt.

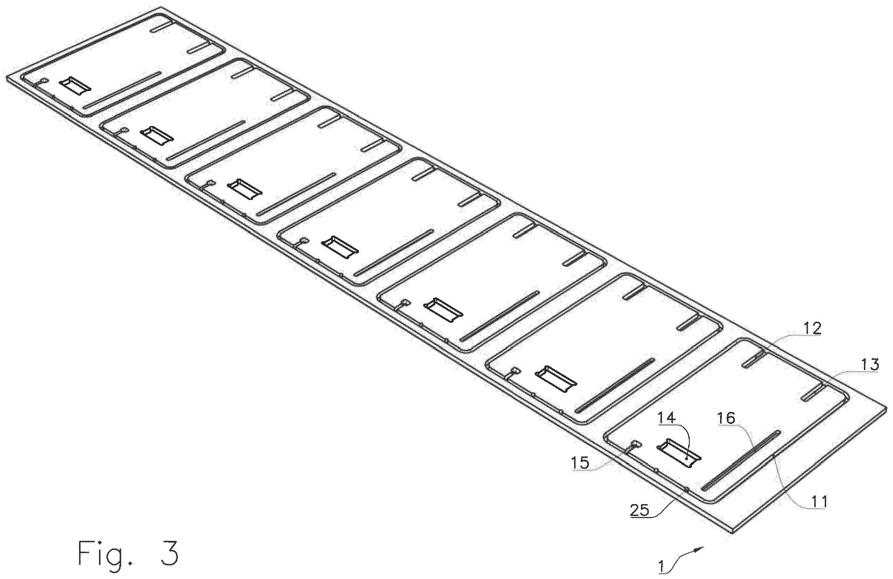

Die Fig. 3 zeigt die Hälfte der Leichtbauplatte 1 gemäß Fig. 2b. Insbesondere kann die Leichtbauplatte 1 aus fertigungstechnischen Gründen halbiert werden, ehe eine Verfüllung mit Vergussmasse erfolgt. Anhand der Darstellung der Fig. 3 kann man auch erkennen, dass Luftaufnahmen 25 vorgesehen sind, um Blasenbildung beim Verfüllen mit Vergussmasse zu verhindern.

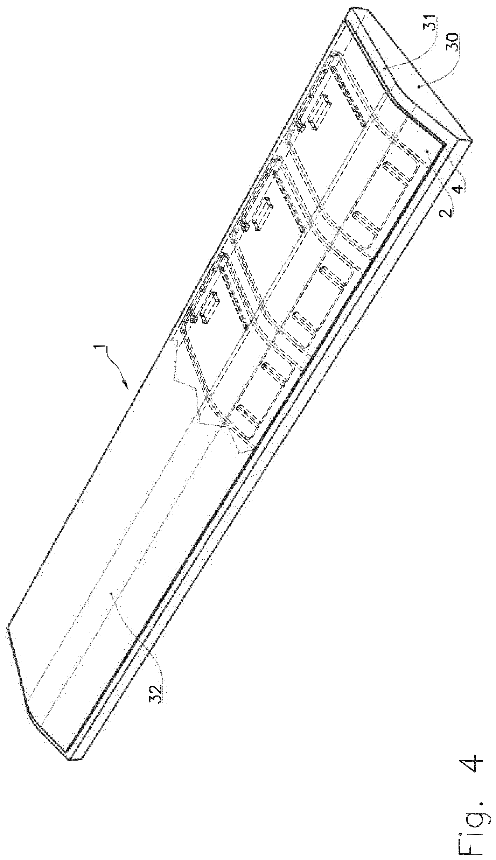

Die Fig. 4 zeigt einen weiteren Schritt in der Herstellung einer Leichtbauplatte 1. Die mit Ausnehmungen versehene Leichtbauplatte 1 bzw. die halbe Leichtbauplatte 1 gemäß Fig. 3 wird auf einer Schablone 30, die eine unebene Oberfläche 31 aufweist, mit einer zweiten Deckschicht 4 verpresst, sodass eine Sandwichstruktur entsteht. Während des Verpressens erfolgt die Formgebung. Insbesondere wird die Leichtbauplatte 1 im Bereich 32 etwas abgewinkelt.

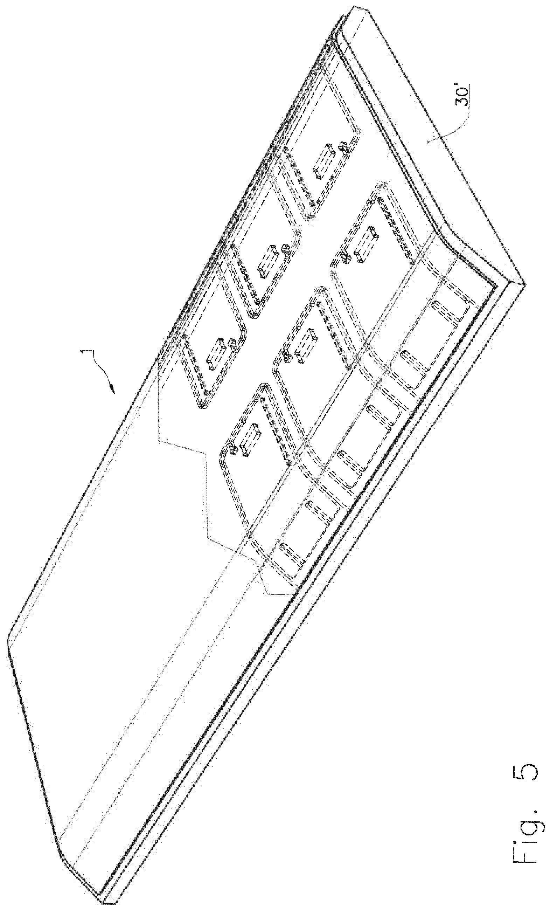

Aus der Fig. 5 wird klar, dass mit einer entsprechenden Schablone 30' auch die gesamte Leichtbauplatte 1 gemäß Fig. 1 und Fig. 2a verformt werden kann, insbesondere in eine dreidimensionale, unebene Gestalt gebracht werden kann, wenn die zweite Deckschicht mit der Zwischenschicht und der ersten Deckschicht verbunden wird.

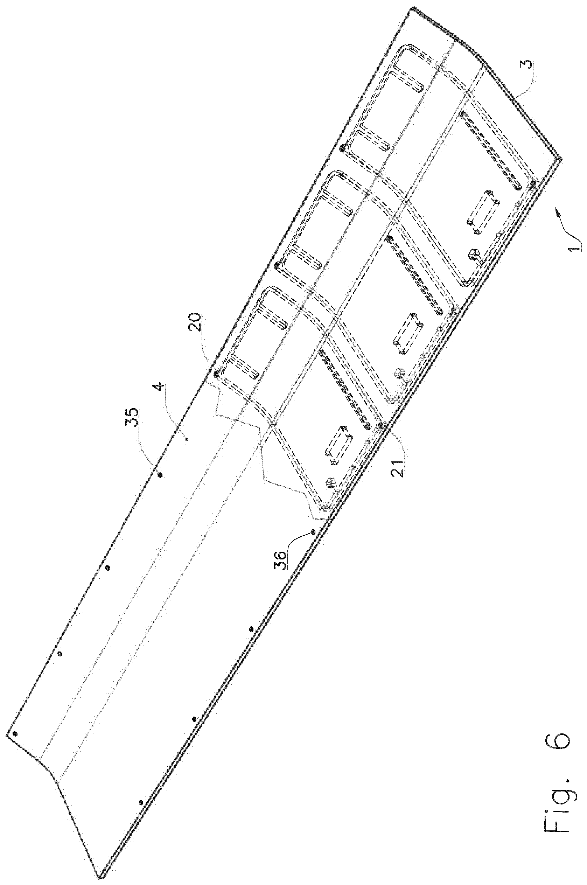

In der Fig. 6 ist gezeigt, dass die Leichtbauplatte 1, die gemäß der Fig. 4 geformt wurde, Öffnungen 35 in der Deckschicht 4 aufweisen kann, um durch diese Öffnungen 35, die als Bohrungen ausgebildet sein können, Vergussmasse einfüllen zu können. Die Öffnungen 35 können im Bereich der Ausnehmungen 20 liegen. Weiterhin sind Öffnungen 36 vorgesehen, die im Bereich der Öffnungen 21 liegen können, um an dieser Stelle einen Unterdruck anlegen zu können und somit Vergussmasse, die durch die Öffnung 35 eingefüllt wird, bis zur Öffnung 36 anzusaugen, um somit eine gleichmäßige und vollständige Verteilung von Vergussmasse in den Ausnehmungen der Zwischenschicht 3 zu bewirken.

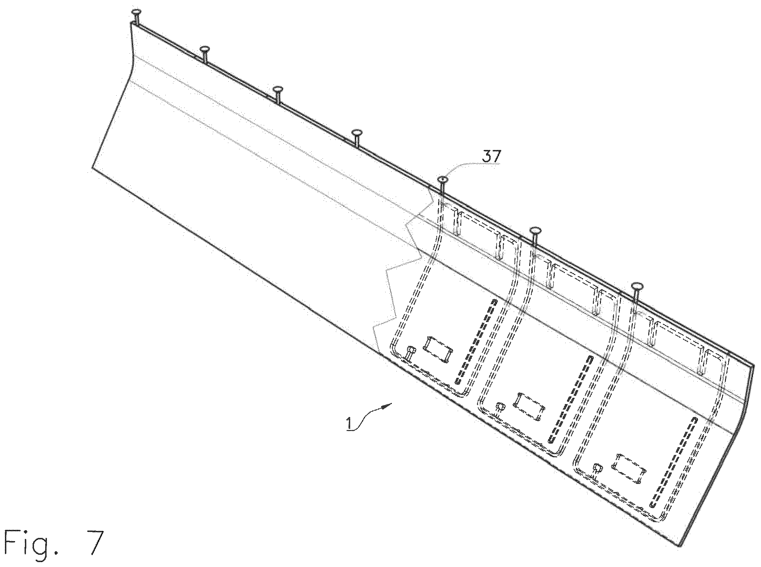

Ausweislich der Fig. 7 kann die Befüllung mit Vergussmasse auch stirnseitig an der Leichtbauplatte 1 erfolgen. Zu diesem Zweck können Vergussspritzen 37 eingesetzt werden. Insbesondere können auch stirnseitig an der Leichtbauplatte 1 Öffnungen eingebracht werden, die mit den Ausnehmungen innerhalb der Zwischenschicht 3 kommunizieren, um auf diese Weise Vergussmasse einbringen zu können.

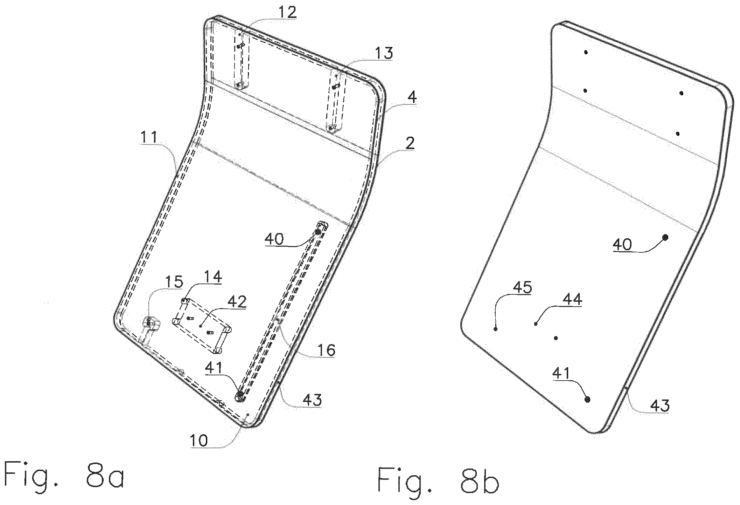

Nachdem alle dafür vorgesehene Ausnehmungen mit Vergussmasse aufgefüllt wurden, kann die Leichtbauplatte 1 vereinzelt werden, insbesondere können die einzelnen Leichtbauelemente aus der Leichtbauplatte 1 herausgetrennt werden. Die Fig. 8a zeigt ein solches Leichtbauelement 10, wobei die in der Zwischenschicht angeordneten Komponenten gestrichelt dargestellt sind. Von außen nicht sichtbar sind der Kabelkanal 16, in den ein Leerrohr, insbesondere eine schlauchartige Kabelaufnahme, integriert sein kann. In einer der Deckschichten 2, 4 können Durchführungen 40, 41 vorgesehen sein, durch die der Kabelkanal 16 zugänglich ist. Im Bereich der Befestigungsausnehmung 14 kann ein Befestigungsmittel 42, insbesondere ein Holzklotz, angeordnet sein. Die Ausnehmungen 12, 13, 15 sind mit Vergussmasse verfüllt. Die Sichtkante 43 weist Vergussmaterial auf. Insbesondere weist der gesamte Umfang des Leichtbauelements 10 Vergussmasse auf. Dies bedeutet, dass das Leichtbauelement 10 im Bereich der aufgefüllten Ausnehmung 11 herausgetrennt wurde, sodass Vergussmasse im Randbereich des Leichtbauelements 10 zwischen 1 mm und 5 mm in den Innenbereich des Leichtbauelements 10 ragt.

Die Fig. 8b zeigt das fertiggestellte Leichtbauelement. Insbesondere sind hier Anschraubpunkte 44 zu erkennen, durch die hindurch in das Befestigungsmittel 42 geschraubt werden kann. Außerdem sind Anschraubpunkte 45 in Bereichen vorgesehen, wo Vergussmasse unterhalb der Deckschicht angeordnet ist, sodass auch in diese Bereiche geschraubt werden kann. In diesen Bereichen kann auch ein Gewinde geschnitten werden.

## Patentansprüche

1. Verfahren zur Herstellung eines Leichtbauelements (10) mit den Verfahrensschritten:
a. Herstellen einer Leichtbauplatte (1) mit den Schritten:
i. Verbinden einer ersten Deckschicht (2) mit einer Zwischenschicht (3);
ii. Ausnehmen der Zwischenschicht (3) an vorgegebenen Bereichen;
iii. Verbinden einer zweiten Deckschicht (4) mit der Zwischenschicht (3);
iv. Auffüllen zumindest eines Teils der ausgenommenen Bereiche mit einer Vergussmasse;
b. Heraustrennen des Leichtbauelements (10) aus der Leichtbauplatte (1),
wobei die Vergussmasse an einer Stirnseite der Leichtbauplatte (1) eingebracht wird und/oder dass in einer der Deckschichten (2, 4) eine Einfüllöffnung (35) erzeugt wird und die Vergussmasse durch die Einfüllöffnung eingebracht wird, **dadurch gekennzeichnet, dass** die ausgenommenen und mit Vergussmasse verfüllten Bereiche so gewählt und angeordnet werden und das Leichtbauelement (10) so aus der Leichtbauplatte (1) herausgetrennt wird, dass die Sichtkante (43) des Leichtbauelements (10) Vergussmasse aufweist.

2. Verfahren nach Anspruch 1, **dadurch gekennzeichnet, dass** während des Einbringens der Vergussmasse in die Leichtbauplatte (1) an einer von der Einbringstelle der Leichtbauplatte (1) beabstandeten Stelle ein Unterdruck angelegt wird.

3. Verfahren nach einem der vorhergehenden Ansprüche, **dadurch gekennzeichnet, dass** in der Zwischenschicht (3) eine Luftaufnahme (25) eingebracht wird.

4. Verfahren nach einem der vorhergehenden Ansprüche, **dadurch gekennzeichnet, dass** in die Zwischenschicht (3) eine Kabelaufnahme eingebracht wird.

5. Verfahren nach einem der vorhergehenden Ansprüche, **dadurch gekennzeichnet, dass** in die Kabelaufnahme eine Kabelführung eingelegt wird und in einer Deckschicht (2, 4) Kabeldurchführungen (40, 41) erzeugt werden, die in die Kabelaufnahme münden.

6. Verfahren nach einem der vorhergehenden Ansprüche, **dadurch gekennzeichnet, dass** eine Befestigungsmittelaufnahme in der Zwischenschicht erzeugt wird und ein Befestigungsmittel (42) eingelegt wird.

7. Verfahren nach einem der vorhergehenden Ansprüche, **dadurch gekennzeichnet, dass** ein Gewinde in die ausgehärtete Vergussmasse geschnitten wird.

8. Verfahren nach einem der vorhergehenden Ansprüche, **dadurch gekennzeichnet, dass** die Sichtkante (43) des Leichtbauelements (10) bearbeitet wird.

9. Verfahren nach einem der vorhergehenden Ansprüche, **dadurch gekennzeichnet, dass** die Leichtbauplatte (1) vor dem Auffüllen mit Vergussmasse verformt wird.

10. Verfahren nach einem der vorhergehenden Ansprüche, **dadurch gekennzeichnet, dass** die Leichtbauplatte (1) vor dem Auffüllen mit Vergussmasse in zumindest zwei Teile aufgeteilt wird.

11. Verfahren nach einem der vorhergehenden Ansprüche, **dadurch gekennzeichnet, dass** in einem Bereich die Deckschicht (2, 4) bis zu einem darunterliegenden Vergussmassenbereich entfernt wird.

12. Verfahren nach einem der vorhergehenden Ansprüche, **dadurch gekennzeichnet, dass** das Auffüllen mit Vergussmasse ohne Verwendung von Haltewerkzeugen zum Zusammenhalten der Leichtbauplatte (1) erfolgt.

13. Leichtbauelement (10), das nach einem Verfahren zur Herstellung eines Leichtbauelements (10) mit den Verfahrensschritten:
a. Herstellen einer Leichtbauplatte (1) mit den Schritten:
i. Verbinden einer ersten Deckschicht (2) mit einer Zwischenschicht (3);
ii. Ausnehmen der Zwischenschicht (3) an vorgegebenen Bereichen;
iii. Verbinden einer zweiten Deckschicht (4) mit der Zwischenschicht (3);
iv. Auffüllen zumindest eines Teils der ausgenommenen Bereiche mit einer Vergussmasse;
b. Heraustrennen des Leichtbauelements (10) aus der Leichtbauplatte (1), wobei die Vergussmasse an einer Stirnseite der Leichtbauplatte (1) eingebracht wird und/oder dass in einer der Deckschichten (2, 4) eine Einfüllöffnung (35) erzeugt wird und die Vergussmasse durch die Einfüllöffnung eingebracht wird,
hergestellt ist, wobei zwischen der ersten und der zweiten Deckschicht (2, 4) die Zwischenschicht (3) angeordnet ist, **dadurch gekennzeichnet, dass** die Zwischenschicht (3) an ihrem Umfang die ausgehärtete Vergussmasse aufweist, die zwischen den Deckschichten (2,4) angeordnet ist und eine Sichtkante (43) darstellt.

14. Leichtbauelement nach Anspruch 13, **dadurch gekennzeichnet, dass** es uneben ausgebildet ist.

## Claims

1. Method for producing a lightweight construction element (10) with the method steps:
a. Producing a lightweight construction panel (1) with the steps:
i. Connecting a first cover layer (2) to an intermediate layer (3);
ii. Removing the intermediate layer (3) at predetermined regions;
iii. Connecting a second cover layer (4) to the intermediate layer (3);
iv. Filling at least a part of the removed regions with a casting compound;
b. Separating the lightweight construction element (10) out of the lightweight construction panel (1),
wherein the casting compound is introduced at a face side of the lightweight construction panel (1) and/or that a filling opening (35) is produced in one of the cover layers (2, 4), and the casting compound is introduced through the filling opening, **characterized in that** the regions taken out and filled with casting compound are selected and arranged in such a way, and the lightweight construction element (10) is separated out of the lightweight construction panel (1) in such a way, that the visible edge (43) of the lightweight construction element (10) exhibits casting compound.

2. Method according to claim 1, **characterized in that**, during the introduction of the casting compound into the lightweight construction panel (1), an underpressure is imposed at a location which is spaced at a distance from the introduction point on the lightweight construction panel (1).

3. Method according to any one of the preceding claims, **characterized in that** an air receiver (25) is introduced in the intermediate layer (3).

4. Method according to any one of the preceding claims, **characterized in that** a cable conduit is introduced into the intermediate layer (3).

5. Method according to any one of the preceding claims, **characterized in that** a cable guide is introduced into the cable conduit, and cable passages (40, 41) are produced in a cover layer (2, 4), which open into the cable conduit.

6. Method according to any one of the preceding claims, **characterized in that** a receiver for securing means is produced in the intermediate layer and a securing means (42) is introduced.

7. Method according to any one of the preceding claims, **characterized in that** a screw thread is cut into the hardened casting compound.

8. Method according to any one of the preceding claims, **characterized in that** the visible edge (43) of the lightweight construction element (10) is processed.

9. Method according to any one of the preceding claims, **characterized in that** the lightweight construction panel (1) is formed before the filling with casting compound.

10. Method according to any one of the preceding claims, **characterized in that** the lightweight construction panel (1) is divided into at least two parts before the filling with casting compound.

11. Method according to any one of the preceding claims, **characterized in that** in one region the cover layer (2, 4) is removed as far as the underlying casting compound.

12. Method according to any one of the preceding claims, **characterized in that** the filling with casting compound takes place without the use of holding tools for holding the lightweight construction panel (1) together.

13. Lightweight construction element (10), which is produced in accordance with a method for producing a lightweight construction element (10) with the method steps:
a. Producing a lightweight construction panel (1) with the steps:
i. Connecting a first cover layer (2) to an intermediate layer (3);
ii. Removing the intermediate layer (3) at predetermined regions;
iii. Connecting a second cover layer (4) to the intermediate layer (3);
iv. Filling at least a part of the removed regions with a casting compound;
b. Separating the lightweight construction element (10) out of the lightweight construction panel (1),
wherein the casting compound is introduced at a face side of the lightweight construction panel (1) and/or that a filling opening (35) is produced in one of the cover layers (2, 4), and the casting compound is introduced through the filling opening,
wherein the intermediate layer (3) is arranged between the first and second cover layers (2, 4), **characterized in that** the intermediate layer (3) comprises the hardened casting compound at its circumference, which is arranged between the cover layers (2, 4) and is a visible edge (43).

14. Lightweight construction element according to claim 13, **characterized in that** it is configured as uneven.

## Revendications

1. Procédé de fabrication d'un élément de construction léger (10), comprenant les étapes consistant à :
a. fabriquer un panneau de construction léger (1), avec les étapes consistant à :
i. lier une première couche de revêtement (2) à une couche intermédiaire (3) ;
ii. exclure la couche intermédiaire (3) au niveau de zones prédéterminées ;
iii. lier une seconde couche de revêtement (4) à la couche intermédiaire (3) ;
iv. remplir au moins une partie des zones d'exclusion avec une matière de scellement ;
b. séparer l'élément de construction léger (10) du panneau de construction léger (1),
dans lequel la matière de scellement est introduite au niveau d'un côté frontal du panneau de construction léger (1) et/ou qu'une ouverture de remplissage (35) est réalisée dans l'une des couches de revêtement (2, 4) et la matière de scellement est introduite à travers l'ouverture de remplissage,
**caractérisé en ce que** les zones d'exclusion et remplies de matière de scellement sont sélectionnées et agencées et l'élément de construction léger (10) est séparé du panneau de construction léger (1) de telle sorte que le bord visible (43) de l'élément de construction léger (10) présente de la matière de scellement.

2. Procédé selon la revendication 1, **caractérisé en ce qu'**une pression négative est appliquée lors de l'introduction de la matière de scellement dans le panneau de construction léger (1) en un emplacement espacé de l'emplacement d'introduction du panneau de construction léger (1).

3. Procédé selon l'une quelconque des revendications précédentes, **caractérisé en ce qu'**un logement d'air (25) est introduit dans la couche intermédiaire (3).

4. Procédé selon l'une quelconque des revendications précédentes, **caractérisé en ce qu'**un logement de câbles est introduit dans la couche intermédiaire (3).

5. Procédé selon l'une quelconque des revendications précédentes, **caractérisé en ce qu'**un guide de câble est inséré dans le logement de câbles et des passages de câble (40, 41) sont réalisés dans une couche de revêtement (2, 4), qui débouchent dans le logement de câbles.

6. Procédé selon l'une quelconque des revendications précédentes, **caractérisé en ce qu'**un logement de moyens de fixation est réalisé dans la couche intermédiaire, et un moyen de fixation (42) y est inséré.

7. Procédé selon l'une quelconque des revendications précédentes, **caractérisé en ce qu'**un filetage est découpé dans la matière de scellement durcie.

8. Procédé selon l'une quelconque des revendications précédentes, **caractérisé en ce que** le bord visible (43) de l'élément de construction léger (10) est traité.

9. Procédé selon l'une quelconque des revendications précédentes, **caractérisé en ce que** le panneau de construction léger (1) est déformé avant le remplissage avec de la matière de scellement.

10. Procédé selon l'une quelconque des revendications précédentes, **caractérisé en ce que** le panneau de construction léger (1) est divisé en au moins deux parties avant le remplissage avec de la matière de scellement.

11. Procédé selon l'une quelconque des revendications précédentes, **caractérisé en ce que** dans une zone, la couche de revêtement (2, 4) est enlevée jusqu'à une zone de matière de scellement sous-jacente.

12. Procédé selon l'une quelconque des revendications précédentes, **caractérisé en ce que** le remplissage avec de la matière de scellement survient sans utilisation d'outils de maintien pour maintenir le panneau de construction léger (1).

13. Elément de construction léger (10) fabriqué par un procédé de fabrication d'un élément de construction léger (10) avec les étapes de procédé consistant à :
a. fabriquer un panneau de construction léger (1), avec les étapes consistant à :
i. lier une première couche de revêtement (2) à une couche intermédiaire (3) ;
ii. exclure la couche intermédiaire (3) au niveau de zones prédéterminées ;
iii. lier une seconde couche de revêtement (4) à la couche intermédiaire (3) ;
iv. remplir au moins une partie des zones d'exclusion avec une matière de scellement ;
b. séparer l'élément de construction léger (10) à partir du panneau de construction léger (1), dans lequel la matière de scellement est introduite au niveau d'un côté frontal du panneau de construction léger (1) et/ou dans lequel une ouverture de remplissage (35) est réalisée dans l'une des couches de revêtement (2, 4) et la matière de scellement est introduite à travers l'ouverture de remplissage,
dans lequel la couche intermédiaire (3) est agencée entre la première et la seconde couche de couverture (2, 4), **caractérisé en ce que** la couche intermédiaire (3) présente la matière de scellement durcie au niveau de sa périphérie, qui est agencée entre les couches de revêtement (2,4) et constitue un bord visible (43).

14. Elément de construction léger selon la revendication 13, **caractérisé en ce qu'**il est formé inégal.
